# FASCICULE DE BREVET EUROPEEN

(11) **EP 0 572 291 B1**
(45) Date de publication et mention de la délivrance du brevet: **11.10.1995**
(21) Numéro de dépôt: 93401129.7
(22) Date de dépôt: 30.04.1993
(51) Int. Cl.: B62M 3/08

(54) **Ensemble d'une pédale cycliste de sécurité et d'une chaussure cycliste, pédale cycliste de sécurité et chaussure cycliste**
Einheit von Fahrradsicherheitspedal und Radfahrschuh
Cyclist safety pedal and shoe assembly

(30) Priorité: 27.05.1992 FR 9206504
(43) Date de publication de la demande: 01.12.1993
(73) Titulaire: Beyl, Jean, F-58000 Nevers (FR)
(72) Inventeur: Beyl, Jean, F-58000 Nevers (FR)
(74) Mandataire: Michardière, Bernard

(56) Documents cités:
- EP-A- 0 058 438
- EP-A- 0 155 114
- EP-A- 0 424 210

## Description

L'invention est relative à l'ensemble d'une pédale cycliste de sécurité, équipée de moyens de butée et d'accrochage sur une face, et d'une chaussure cycliste ayant une semelle équipée d'une cale logée dans un évidement de la semelle, cette cale étant située dans une région destinée à se trouver sensiblement sous le métatarse du pied du cycliste, ladite cale ayant une dimension réduite suivant la direction longitudinale de la semelle de sorte que l'extrémité avant de la cale se trouve sensiblement en retrait de la pointe de la semelle, les moyens de butée et d'accrochage de la pédale comprenant un organe frontal de butée et de retenue, sensiblement parallèle à l'axe, normalement horizontal, de la pédale et situé en avant de cet axe, et un organe d'accrochage arrière, situé en arrière de l'axe de la pédale, et susceptible de se déplacer suivant une direction sensiblement orthogonale à l'axe de la pédale, à l'encontre de moyens de rappel élastiques, l'ensemble étant tel qu'un cycliste équipé de la chaussure peut provoquer l'accrochage de la semelle sur la pédale en exerçant une pression sensiblement verticale sur ladite pédale, tandis qu'il peut libérer la semelle de la pédale par un mouvement de torsion du pied.

FR - A- 2653089 concerne, notamment, une pédale cycliste de sécurité du genre défini précédemment destinée à être combinée avec une cale logée dans un évidement de la semelle d'une chaussure cycliste, de façon à ne pas gêner la marche à pied du cycliste. Ce type de pédale et la chaussure cycliste équipée de la semelle appropriée, tels que définis dans les préambules des revendications indépendantes 1, 15 et 21, constituent un ensemble donnant satisfaction, notamment pour la pratique du cyclotourisme qui ne nécessite pas des accrochages ou des décrochages de la chaussure trop fréquents.

Par contre, la pratique du vélo tout terrain ou du cyclocross nécessite des accrochages et décrochages fréquents de la chaussure cycliste. Les accrochages doivent être aussi faciles et rapides que possible pour éviter toute perte de temps. Il est souhaitable, en particulier, que le cycliste puisse procéder à un accrochage de la chaussure sur la pédale "à l'aveugle" c'est-à-dire sans avoir à regarder la pédale au moment de l'accrochage.

L'invention a pour but, surtout, de fournir un ensemble de pédale cycliste de sécurité et de chaussure cycliste tel que le cycliste puisse effectuer, a coup sûr, un accrochage et un chaussage rapide à l'aveugle.

L'invention a également pour but de fournir un ensemble de pédale cycliste de sécurité et de chaussure cycliste dont le fonctionnement reste sûr, même si le cycliste a dû marcher dans de la terre plus ou moins humide, qui a pu se coller sur la semelle et/ou la cale.

Il est souhaitable, en outre, que la pédale de sécurité d'un tel ensemble reste d'une conception simple et robuste.

Selon l'invention, un ensemble de pédale cycliste de sécurité et de chaussure cycliste, tel que défini précédemment, est caractérisé par le fait que la pédale comprend, à l'avant, un bec incliné vers l'avant dont l'arête inférieure est située, relativement au plan médian de la pédale, du côté opposé à l'organe frontal de butée et à l'organe d'accrochage arrière ; que la pédale est agencée pour prendre une position de repos située dans une plage telle que l'arête inférieure du bec avant se trouve en haut de la pédale et en avant du plan vertical passant par l'axe de la pédale ; et que la semelle comporte des moyens de guidage longitudinal propres à coopérer avec le susdit bec et avec des moyens conjugués de guidage longitudinal prévus sur la pédale, les moyens de guidage longitudinal comprenant dans la partie avant de la semelle englobant la zone où se trouve la cale, une sorte de cavité longitudinale en forme de tunnel, s'ouvrant vers l'avant de la semelle, à une distance réduite de l'extrême pointe avant de la semelle, la partie avant de ce tunnel étant limitée, dans le fond, par une paroi lisse favorable au glissement des moyens de butée et d'accrochage de la pédale contre ce fond, tandis que les moyens conjugués de guidage longitudinal de la pédale comprennent à l'arrière de la pédale, une sorte de capot, dont la surface supérieure est propre à venir glisser contre le fond du tunnel de la semelle et/ou contre la cale permettant d'éviter un accrochage intempestif de la partie avant de la cale sur l'organe d'accrochage arrière de la pédale.

De préférence, la pédale est munie d'un contrepoids, et est agencée de manière que dans sa position normale de repos, son plan moyen soit incliné d'environ 30 ° vers l'avant, par rapport au plan vertical passant par l'axe horizontal de la pédale, le bec de la pédale étant situé vers le haut, l'arête inférieure du bec avant demeurant en avant dudit plan vertical, même si la pédale pour une raison quelconque, prend une position légèrement inclinée vers l'arrière.

Avantageusement, la pédale est agencée de telle sorte que l'arête inférieure dudit bec reste en avant du plan vertical passant par l'axe horizontal de la pédale pour une plage angulaire de positions de la pédale allantjusqu'à une position inclinée vers l'arrière d'environ 30°.

Ainsi, selon l'invention, bien que les moyens de butée et d'accrochage de la pédale ne soient prévus que sur une face, lors de la phase d'accrochage de la chaussure sur la pédale, la semelle du cycliste rencontrera l'arête inférieure du bec avant de la pédale en avant du plan vertical passant par l'axe de la pédale. Dans ces conditions, un effort vers le bas exercé sur cette arête provoquera une rotation dans le sens convenable de la pédale, plaçant les moyens de butée et d'accrochage au-dessus de l'axe de la pédale.

Le bec avant de la pédale a, de préférence, un contour sensiblement en forme de trapèze dont la petite base constitue la susdite arête inférieure avant. La surface de ce bec avant peut être sensiblement plane, ou légèrement convexe vers l'avant.

De préférence ladite cale comprend une partie médiane bombée facilitant le glissement de cette cale sur ledit capot. Les surfaces latérales du capot sont avantageusement agencées pour faciliter le décrochage de la chaussure, relativement à la pédale, lors d'un mouvement de torsion du pied de l'utilisateur, par coopération de l'une des surfaces latérales du capot avec une des parois latérales du tunnel de la semelle.

La profondeur du tunnel et le profil en long de son fond sont déterminés, en fonction des cotes de la pédale, du capot, et de la cale, pour assurer, au cours du mouvement d'avance de la chaussure, le passage de la cale au-dessus de l'organe d'accrochage arrière, puis un pivotement suffisant vers le haut de l'avant de la pédale en vue de l'accrochage.

De préférence, la semelle de la chaussure comporte également des moyens de guidage latéral propres à coopérer avec des moyens de guidage conjugués prévus sur la pédale pour assurer un positionnement de la cale relativement à la pédale suivant une direction parallèle à l'axe de la pédale.

Ces moyens de guidage latéral, prévus sur la semelle, comprennent avantageusement les parois latérales du tunnel de la semelle qui sont obliques par rapport au plan longitudinal médiateur de la semelle, de telle sorte qu'une section transversale du tunnel a la forme d'un trapèze dont la grande base est située vers le bas et la petite base est située dans le fond du tunnel, tandis que les moyens de guidage latéral conjugués de la pédale sont constitués par des surfaces inclinées ou arrondies transversalement prévues sur les bords latéraux de l'organe de butée frontal de la pédale et de l'organe d'accrochage arrière, de sorte que la coopération d'une paroi latérale oblique du tunnel et d'une surface arrondie ou inclinée, amène naturellement la semelle et la cale dans la position correcte d'accrochage. De préférence, la largeur de la section du tunnel en partie basse est supérieure d'environ 15 mm à la dimension suivant la direction parallèle à l'axe de la pédale, de l'organe de butée frontal et de l'organe arrière d'accrochage de la pédale, tandis que la largeur de la section du tunnel, au niveau de la zone des parois latérales du tunnel contre laquelle peut venir en appui un bord latéral de l'organe de butée frontal, est choisie pour autoriser une liberté en coulissement latéral réduit, notamment d'environ 5 mm.

Avantageusement, l'organe de butée frontal est constitué par un arceau, généralement en fil métallique de section circulaire, cet arceau présentant une barre sensiblement parallèle à l'axe de la pédale et située au dessus du plan de la pédale, et deux parties sensiblement perpendiculaires au plan de la pédale, constituant des montants, et se raccordant à la barre transversale par un arrondi. L'agencement de l'organe d'accrochage arrière est semblable. L'arrondi du raccordement entre la barre transversale et les montants de l'arceau a un rayon suffisant pour assurer un bon guidage latéral de la semelle en coopérant avec la paroi latérale oblique du tunnel de la semelle. De préférence, le rayon intérieur de courbure de l'arrondi des angles de l'arceau est supérieur ou égal à 6 mm.

La cale, fixée sous la semelle, comporte à l'avant et à l'arrière dans sa partie médiane, des prolongements de largeur réduite, faisant saillie suivant la direction longitudinale et propres à s'engager sous la barre transversale de l'arceau correspondant de la pédale ; l'ouverture d'entrée, associée à chaque prolongement, a une dimension supérieure au diamètre de la barre, tandis qu'en fond de logement la dimension de l'espace réservé est sensiblement égale au diamètre de la barre de l'arceau.

Avantageusement, la cale comporte, dans sa partie destinée à venir en contact avec la semelle, deux lames convexes vers l'extérieur, sensiblement rectangulaires, séparées par un espace longitudinal central et s'étendant suivant la direction longitudinale de la semelle, ces lames étant propres à être reçues dans des évidements prévus dans la semelle pour assurer un guidage longitudinal de la cale relativement à la semelle, lors de son réglage.

L'ensemble pédale/chaussure est agencé, de préférence, de manière que lors de l'attaque de la pédale par la semelle de la chaussure, dans un mouvement d'arrière vers l'avant et de haut en bas, en vue de l'accrochage, la pédale bascule sensiblement à l'horizontale par coopération initiale du bec de la pédale avec la semelle, puis la barre transversale de l'arceau avant s'applique contre le fond du tunnel de la semelle tandis que le capot arrière vient en appui contre la semelle, ou la cale, au cours du glissement d'avance de la semelle relativement à la pédale, le capot étant libéré de ce contact au moment de l'accrochage correct de la cale sur la pédale.

L'invention est également relative à une pédale cycliste de sécurité, en particulier pour la pratique du vélo tout terrain, ou du cyclocross, équipée de moyens de butée et d'accrochage sur une face comprenant un organe frontal de butée et de retenue, sensiblement parallèle à l'axe de la pédale, normalement horizontal, et situé en avant de cet axe, et un organe d'accrochage arrière situé en arrière de l'axe de la pédale et susceptible de se déplacer suivant une direction sensiblement orthogonale à l'axe de la pédale à l'encontre de moyens de rappel élastiques, cette pédale étant caractérisée par le fait qu'elle comporte un bec incliné vers l'avant et dont l'arête inférieure est située, relativement au plan médian de la pédale, du côté opposé à l'organe frontal de butée et à l'organe d'accrochage arrière, la pédale étant agencée pour prendre une position normale de repos telle que le bec soit situé en haut et en avant d'un plan vertical passant par l'axe horizontal de la pédale.

De préférence, la pédale est équipée d'un contrepoids, et est agencée pour prendre une position normale de repos inclinée d'environ 30° par rapport à la verticale, le bec étant agencé de telle sorte que son arête inférieure reste en avant du plan vertical passant par l'axe horizontal de la pédale même si la pédale prend une position inclinée vers l'arrière jusqu'à 30° environ.

La pédale comprend, à l'arrière, une sorte de capot dont la surface supérieure, en particulier convexe, est propre à venir glisser contre la semelle d'une chaussure cycliste équipée d'une cale pour éviter un accrochage intempestif de la partie avant de la cale sur l'organe d'accrochage arrière de la pédale.

L'organe de butée frontal et l'organe d'accrochage arrière sont avantageusement constitués, respectivement, par un arceau en fil métallique présentant une barre sensiblement parallèle à l'axe de la pédale et située au dessus du plan de la pédale, et deux parties sensiblement perpendiculaires au plan de la pédale qui constituent des montants, se raccordant à la barre transversale par un arrondi. L'arrondi de raccordement a un rayon suffisant pour déterminer une surface convexe extérieure favorable au guidage. De préférence, le rayon intérieur de courbure de cet arrondi est supérieur ou égal à 6 mm.

La pédale peut comporter, de part et d'autre des arceaux, suivant une direction parallèle à l'axe de la pédale, des bossages d'appui propres à coopérer avec la surface inférieure de la semelle lorsque l'accrochage de la semelle a été réalisé sur la pédale.

L'invention est également relative à une chaussure cycliste destinée à coopérer avec une telle pédale, cette chaussure comportant une semelle équipée d'une cale logée dans un évidement, ladite cale ayant une dimension réduite suivant la direction longitudinale de la semelle de sorte que l'extrémité avant de la cale se trouve sensiblement en retrait de la pointe de la semelle, cette chaussure étant caractérisée par le fait que la semelle comporte, dans sa partie médiane longitudinale, une sorte de tunnel s'ouvrant vers l'avant de la semelle à une distance réduite de l'extrême pointe avant de la semelle, ce tunnel s'étendant au moins depuis l'extrémité avant de la cale, le fond de ce tunnel étant constitué par une paroi lisse favorable au glissement. Le tunnel est avantageusement limité par des parois latérales obliques de sorte que la section transversale de ce tunnel a la forme d'un trapèze dont la grande base est située vers le bas. La largeur de la section du tunnel en partie basse est supérieure d'environ 15 mm à la dimension, suivant l'axe de la pédale, de l'organe de butée frontal de cette pédale, tandis que la largeur du tunnel au niveau de la zone des parois latérales du tunnel contre laquelle peut venir en appui un bord latéral de l'organe de butée frontal, est choisie pour autoriser une liberté en coulissement latéral réduit, en particulier d'environ 5 mm.

Avantageusement, la semelle est réalisée en deux parties, à savoir une semelle interne, ou première, rigide dans laquelle sont prévues des ouvertures longitudinales pour le passage de vis de fixation de la cale et le réglage en longueur, et une semelle de marche en une matière plus souple dans laquelle est prévue le susdit tunnel. Une fenêtre, dans la semelle de marche, donne accès à ces ouvertures longitudinales.

Les parties de la semelle de marche, en saillie de part et d'autre de l'évidement du tunnel, comportent des zones propres à venir prendre appui sur la pédale, de part et d'autre des organes de butée et d'accrochage.

L'invention consiste, mises à part les dispositions exposées ci-dessus, en un certain nombre d'autres dispositions dont il sera plus explicitement question ci-après, à propos d'un exemple de réalisation décrit avec référence aux dessins ci-annexés, mais qui n'est nullement limitatif.

La figure 1, de ces dessins, est une vue, de l'avant, de l'ensemble d'une pédale cycliste de sécurité droite et d'une chaussure cycliste, accrochée à cette pédale, conforme à l'invention.

La figure 2 est une vue de dessous, à échelle réduite, de la semelle d'une chaussure gauche, selon l'invention.

La figure 3 est une vue de côté, en coupe, avec parties en extérieur,de la pédale occupant sensiblement sa position normale de repos, et de la semelle de la chaussure au début de la phase d'approche en vue de l'accrochage.

La figure 4 montre, semblablement à la figure 3, le début d'une phase d'approche, en vue de l'accrochage de la semelle, alors que la pédale occupe une position inclinée vers l'arrière due par exemple à des trépidations.

Les figures 5 à 8 illustrent, semblablement à la figure 3, diverses phases de l'opération d'accrochage de la chaussure.

La figure 9 montre schématiquement et partiellement la chaussure correctement accrochée à la pédale.

La figure 10, enfin, est une vue en perspective depuis l'avant droit d'une pédale droite conforme à l'invention.

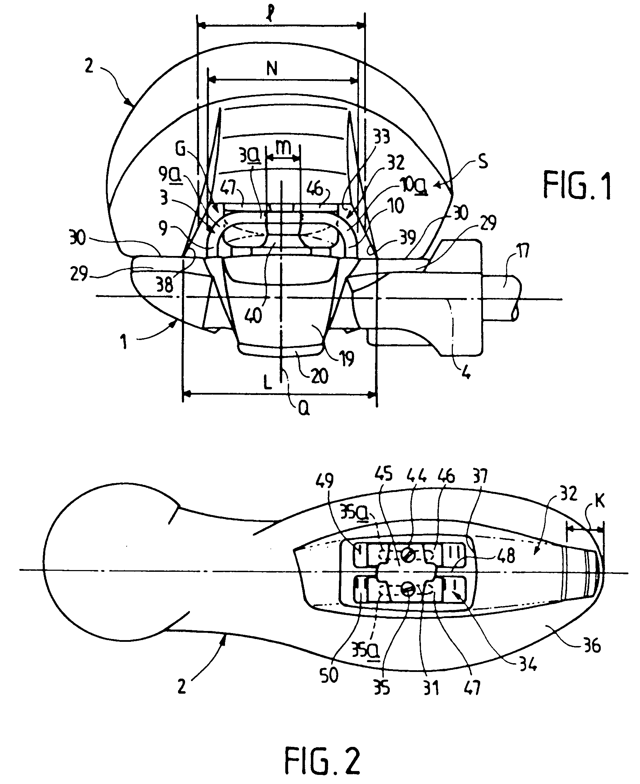

En se reportant aux dessins, notamment aux figures 1, 3 et 4, on peut voir l'ensemble d'une pédale cycliste de sécurité 1 et d'une chaussure cycliste 2 spécialement agencée pour s'accrocher sur cette pédale.

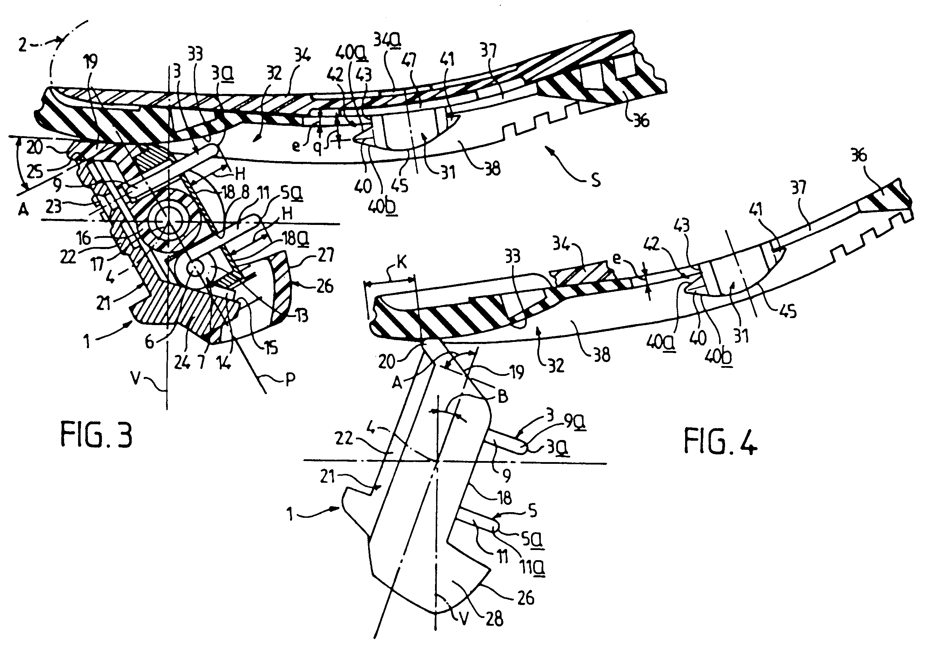

La pédale 1 est équipée, sur une seule face, de moyens de butée et d'accrochage comprenant un organe frontal de butée et de retenue 3 fixé sur la pédale et situé en avant de l'axe géométrique 4 de la pédale normallement horizontal, et un organe d'accrochage arrière 5 situé en arrière de l'axe géométrique 4. Cet organe d'accrochage arrière est susceptible de se déplacer sensiblement suivant une direction orthogonale à l'axe 4 de la pédale; dans l'exemple considéré, l'organe 5 peut tourner autour d'un axe 6 situé en arrière de l'axe géométrique 4 de la pédale, de manière telle que la tangente au point de départ de la trajectoire de l'organe 5 soit sensiblement orthogonale à l'axe géométrique 4. Des moyens de rappel élastiques 7 sont prévus pour rappeler l'organe 5 dans la position d'accrochage illustrée sur la figure 3, en butée contre un appui 8.

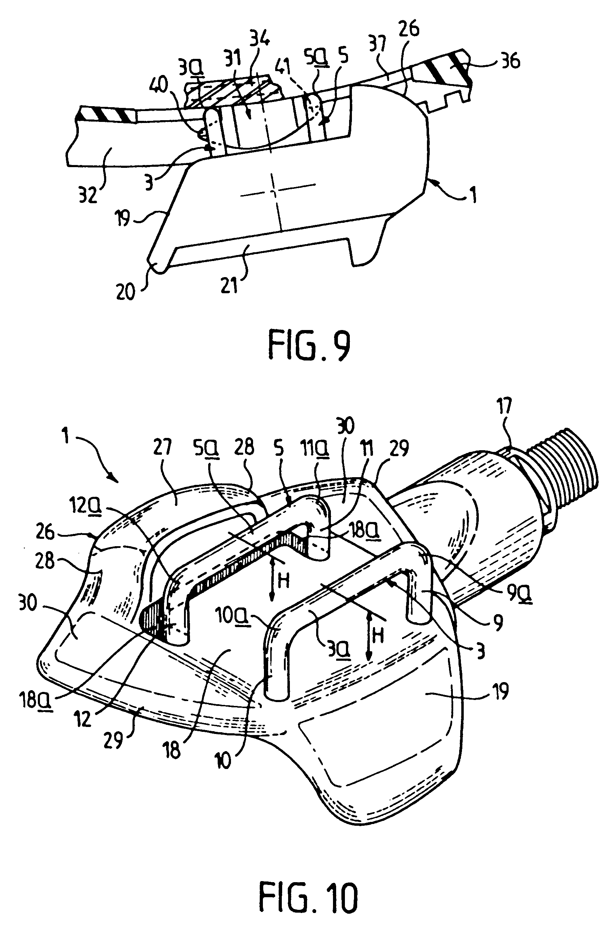

L'organe frontal de butée 3 est constitué par un arceau en fil métallique, en particulier en fil d'acier inoxydable (voir figure 10), généralement de section circulaire. Cet arceau présente une barre 3a sensiblement parallèle à l'axe de la pédale. Cette barre 3a, est située au-dessus du plan supérieur de la pédale. L'arceau comprend deux parties sensiblement perpendiculaires au plan supérieur de la pédale, constituant des montants 9 et 10, se raccordant à la barre transversale 3a, par des arrondis 9a, 10a. Les montants 9 et 10 sont fixés dans le corps de la pédale.

L'organe d'accrochage arrière 5 est également constitué par un arceau en fil métallique comportant une barre 5a, parallèle à l'axe 4, et deux montants 11, 12 perpendiculaires au plan supérieur de la pédale dans la position de repos de l'organe 5. Les barres transversales 3a et 5a sont situées à la même distance H au-dessus du plan supérieur de la pédale. Des arrondis 11a, 12a assurent le raccordement entre les montants 11, 12 et la barre 5a.

Les extrémités des montants 11 et 12, éloignées de la barre transversale 5a sont enroulées, en sens inverse, de manière à constituer deux ressorts de torsion tels que 13, formant les moyens de rappel élastiques 7. L'axe 6 est engagé à l'intérieur de ces ressorts de torsion 13. La spire extrême de chaque ressort de torsion comporte un brin 14 de prolongement suivant une direction tangentielle, prenant appui contre une surface de butée 15 prévue sur la pédale.

Le corps de la pédale comporte, entre les deux arceaux, un manchon 16 dans lequel est prévu un alésage pour recevoir une partie de l'arbre 17 de la pédale, l'extrémité extérieure de cet arbre étant filetée (voir figure 10) pour le montage de la pédale sur une manivelle.

La surface supérieure de la pédale est constituée par une plaque 18, fixée sur le corps de la pédale, comportant des passages pour les montants 9, 10 de l'arceau avant et des ouvertures longitudinales telles que 18a pour le passage des montants 11, 12 de l'arceau arrière. Les ouvertures 18a ont une longueur suffisante pour permettre un débattement des montants 11 et 12, vers l'arrière par rotation autour de l'axe 6, assurant le décrochage de la cale.

L'extrémité avant de la pédale 1 est constituée par un bec 19, incliné vers l'avant par rapport au plan médian P (figure 3) de la pédale. Ce plan médian ou moyen P passe par l'axe géométrique 4 et est parallèle au plan supérieur.de la pédale.

L'angle d'inclinaision A entre le bec 19 et la direction orthogonale au plan P est d'environ 30°. L'arête inférieure 20 du bec 19 est située, relativement au plan médian P, du côté opposé à la barre frontale de butée 3a et la barre d'accrochage arrière 5a.

La pédale 1 est agencée pour prendre une position de repos, correspondant à celle illustrée sur la figure 3, telle que le bec 20 soit situé en haut, et en avant du plan vertical V passant par l'axe géométrique 4, horizontal, de la pédale. Pour un tel agencement, la pédale 1 comporte un contrepoids 21, par exemple en alliage métallique moulé, constitué par une sorte de plaque 22 fixée sous la pédale par des vis 23 et munie , à l'arrière, d'une partie renflée 24 concentrant la masse du contrepoids. La surface supérieure de la partie renflée 24 est oblique en remontant vers l'arrière, et constitue la surface de butée 15 évoquée précédemment. La fixation du contrepoids 21, à l'aide des vis 23 sur le corps de la pédale, permet, par action de la surface 15 contre le brin de prolongement 14, de donner une précontrainte aux ressorts de torsion tels que 13, les montants 11 et 12 de l'arceau étant en butée vers l'avant contre l'appui 8. L'extrémité avant 25 de la plaque 22 vient en appui contre la face interne du bec 19 de la pédale.

Le bec 19 a un contour sensiblement en forme de trapèze, comme visible sur les figures 1 et 10, la petite base du trapèze étant située vers le bas et étant formée par l'arête 20. La surface du bec 19 peut être plane. Le cas echéant, elle peut présenter une légère convexité vers l'avant.

Le bec 19 et la pédale 1 sont agencés de telle sorte que l'arête 20 reste en avant du plan vertical V même si la pédale 1, comme illustrée sur la figure 4 prend, par suite par exemple de vibrations ou d'un mouvement d'inertie, une position inclinée vers l'arrière d'un angle B (entre le plan médian P de la pédale et le plan vertical V) pouvant aller jusqu'à 30° environ.

La pédale 1 comporte, à l'arrière, une sorte de capot 26 dont la surface supérieure 27 est propre à venir glisser contre la semelle S de la chaussure 2. Le bord avant de la surface supérieure 27 s'étend transversalement, comme visible sur la figure 10, à une distance de la surface supérieure 18 de la pédale de préférence légèrement supérieure à la distance H (voir figure 3) entre la barre arrière 5a et ladite surface supérieure de la pédale. Le capot 26 comprend de chaque côté, des parois telles que 28 dirigées vers la pédale et propres à coopérer avec la semelle, comme expliqué plus loin, pour faciliter le décrochage.

La partie supérieure de la pédale déborde, latéralement, de part et d'autre des arceaux par des sortes d'ailettes triangulaires 29 (voir figure 10) dont la largeur augmente vers l'arrière. Sur ces ailettes 29 sont prévues des surépaisseurs 30, formant bossages, propres à coopérer avec des parties de la semelle S.

La semelle S de la chaussure comporte des moyens de guidage longitudinal G propres à coopérer avec des moyens conjugués de guidage longitudinal prévus sur la pédale 1 et comprenant le bec 19, les arrondis 9a, 10a, 11a, 12a des arceaux, et le capot 26.

Les moyens G comprennent, dans la partie avant de la semelle S englobant la zone où se trouve une cale 31 de fixation à la pédale, une sorte de cavité longitudinale formant un tunnel 32. Le tunnel 32 s'ouvre vers l'avant de la semelle à une distance réduite K (voir figure 4) de l'extrême pointe avant de la semelle ; K peut être de l'ordre de 35 mm.

La partie avant du tunnel 32 est limitée, dans le fond, par une paroi lisse 33 favorable au glissement. Généralement, la semelle S comprend une première rigide 34 (figure 3) dans laquelle sont prévues des ouvertures longitudinales 35a (figure 2), pour le passage de vis de fixation 35 (figure 2) de la cale 31, chaque vis 35 étant engagée dans un trou taraudé prévu dans une plaque métallique 34a (figure 3) située du côté intérieur de la première 34. Les ouvertures longitudinales 35a permettent de régler, par coulissement des vis, la position longitudinale (ou réglage en longueur) de la cale 31. La première 34 est recouverte, par dessous, d'une semelle de marche 36 en matériau plus souple que celui de la semelle première 34, notamment en élastomère. La semelle extérieure 36 comporte une fenêtre 37 (voir figure 2) dans le fond du tunnel 32 de manière à libérer l'accès à la première 34 dans la zone des ouvertures servant au passage des vis 35. La fenêtre 37 a une longueur suffisante pour permettre le réglage de la position longitudinale de la cale 31 en fonction de la morphologie du cycliste.

Il est à noter que la première rigide 34 permet d'éviter que le cycliste ait la désagréable impression que la cale 31 et/ou les arceaux 3, 5 lui "rentrent" dans le pied lorsqu'il appuie fortement sur la pédale, ou l'impression inverse lorsqu'il tire sur la pédale. La rigidité de la semelle permet de répartir les efforts sur toute la surface de la semelle.

Pour la marche à pied, la semelle plus souple 36 vient atténuer la rigidité de la première 34.

La paroi lisse 33 peut monter de l'avant vers l'arrière en se rapprochant de la première 34. Au niveau du bord avant de la fenêtre 37, la semelle 36 a une épaisseur e réduite (voir figure 4).

Le tunnel 32 est délimité par des parois latérales 38, 39, lisses également, obliques par rapport au plan vertical longitudinal médian Q (figure 1) de la semelle. Les parois 38, 39 s'écartent l'une de l'autre en se dirigeant vers le bas. La section transversale du tunnel 32, comme visible sur la figure 1, a la forme d'un trapèze dont la grande base est située vers le bas et dont la petite base est située au niveau du fond 33. Les parois 38 et 39 peuvent être planes ou légèrement bombées.

La largeur L (voir figure 1) de la section du tunnel 32, en partie basse, est supérieure d'environ 15 mm à la dimension N, suivant une direction parallèle à l'axe 4, de l'organe de butée frontal 3 et de l'organe d'accrochage arrière 5 de la pédale 1. Cette dimension N est égale à la distance entre les surfaces extérieures des montants tels que 9 et 10. La largeur l, au niveau de la zone des parois 38, 39 propres à buter transversalement contre l'organe 3 ou 5, lorsque la chaussure est accrochée en place, est prévue pour assurer un jeu latéral, notamment d'environ 5 mm. Le cycliste peut ainsi régler librement la position latérale de son pied.

Les parois latérales obliques 38, 39 du tunnel constituent des moyens de guidage latéral propres à coopérer avec les arrondis 9a, 10a de l'arceau avant de la pédale. Ces arrondis 9a, 10a constituent des moyens conjugués de guidage latéral, de même que les arrondis 11a, 12a, et le bec 19, pour la pédale.

La cale 31, réalisée en métal, notamment en alliage cupro-aluminium, comporte à l'avant et à l'arrière des prolongements respectivement 40, 41 ayant une largeur m (voir figure 1) réduite, par exemple de l'ordre de 10 mm. Par largeur m on désigne la dimension des prolongements 40, 41 suivant une direction parallèle à l'axe géométrique 4 de la pédale. Les prolongements 40, 41 sont situés sensiblement à mi-largeur de la cale 31, et sont propres à coopérer avec les barres transversales 3a, 5a respectives de l' organe frontal de butée 3 et de l' organe d'accrochage arrière 5.

Les faces longitudinales 40a, 40b (voir figure 3) du prolongement 40 sont inclinées d'arrière en avant de sorte que l'épaisseur du prolongement 40 diminue vers l'avant. Une inclinaison en sens inverse est prévue pour le prolongement arrière 41.

L'ouverture d'entrée 42, associée au prolongement avant 40, a une dimension q, suivant une direction sensiblement orthogonale à la surface voisine de la semelle, supérieure, par exemple de 2 ou 3 mm, au diamètre du fil métallique constituant la barre transversale 3a. Par contre, au niveau de la partie arrière du prolongement 40, la dimension 43 de l'espace prévu pour la barre 3a est sensiblement égale au diamètre du fil de cette barre 3a.

Un agencement semblable est prévu au niveau du prolongement arrière 41.

Dans la zone de la cale 31 comprise entre deux trous 44 prévus pour le passage des vis de fixation 35 (voir figure 2), la cale comporte une surface lisse 45 convexe vers l'extérieur, propre à favoriser le glissement de la cale sur le capot 26 et sur la barre 5a lors de la phase d'approche pour l'accrochage.

La cale 31 comporte, dans sa partie destinée à se trouver au contact de la semelle, deux lames 46, 47 (voir figure 2) convexes vers l'extérieur sensiblement rectangulaires séparées par un espace longitudinal central dans lequel est engagé une nervure longitudinale 48 prévue dans la première rigide 34.

Les lames 46, 47 sont reçues dans des évidements rectangulaires 49, 50 prévus dans la première rigide 34 et propres à assurer, par leurs parois, le guidage de la cale en vue de son réglage suivant la direction longitudinale.

Ceci étant, l'utilisation et le fonctionnement d'un ensemble pédale cycliste/chaussure cycliste selon l'invention sont les suivants.

Lorsque la pédale 1 est libre, elle occupe une position normale de repos illustrée sur la figure 3 correspondant à une inclinaison vers l'avant d'environ 30°, l'axe 4 étant horizontal ou sensiblement horizontal.

L'accrochage de la chaussure 2 sur la pédale 1 s'effectue par un mouvement naturel du pied d'arrière en avant, la pédale 1 se trouvant de préférence au milieu de la phase descendante de la manivelle sur laquelle elle est fixée, c'est-à-dire que cette manivelle est sensiblement horizontale.

La pointe de la semelle S va à la rencontre du bec 19 de la pédale comme illustré sur la figure 3, et le cycliste, sans avoir à regarder la pédale, peut engager aisément ce bec 19 dans l'entrée du tunnel 32 relativement large, qui se trouve au voisinage de la pointe de la semelle. Dès que la semelle exerce un appui vers le bas sur le bec 19, la pédale 1 bascule vers une position sensiblement horizontale, les arceaux 3 et 5 se trouvant du bon côté de la pédale, c'est-à-dire au dessus de l'axe géométrique 4.

La partie supérieure de l'arceau 3 et la barre 3a entrent dans le tunnel 32, comme illustré sur la figure 3.

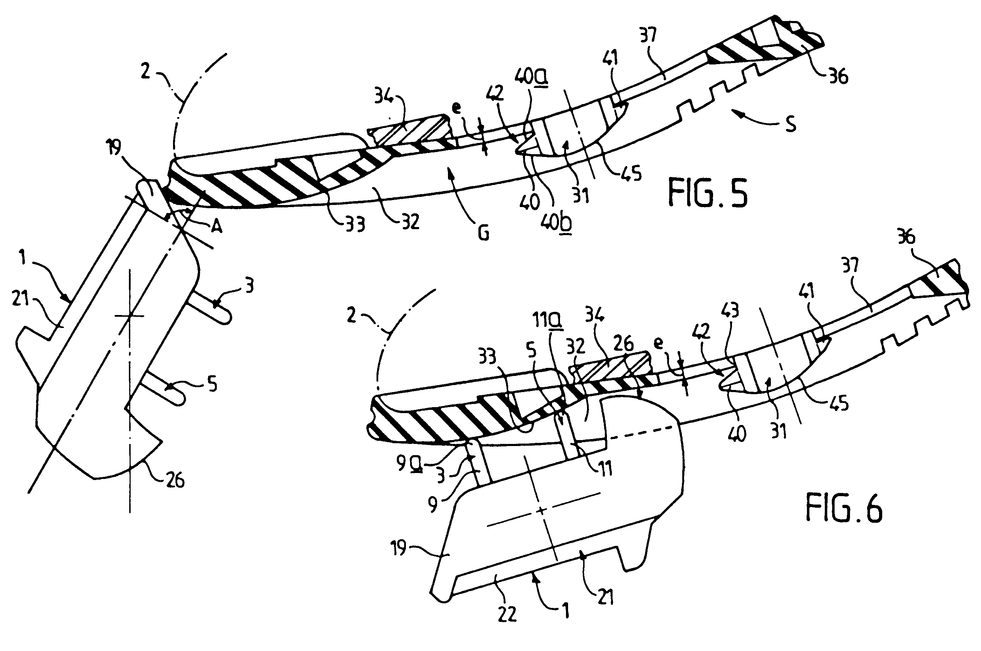

La course de la chaussure et de la semelle vers le bas et vers l'avant se poursuivant, l'arceau 3 par sa barre 3a vient en appui contre le fond 33 du tunnel 32 et le basculement vers l'avant du bec 19 de la pédale se poursuit comme illustré sur la figure 6, avec l'entrée de la barre 5a et de la partie supérieure de l'arceau arrière 5 dans le tunnel 32, ainsi que l'entrée du capot 26 dans ce tunnel.

Le glissement d'arrière en avant s'effectue dans de bonnes conditions puisque la surface du fond 33 du tunnel 32 est lisse, tandis que le guidage latéral s'effectue dans par coopération des parois inclinées 38, 39 du tunnel 32 avec les arrondis latéraux 9a, 10a, et 11a, 12a des arceaux 3 et 5.

Au cours de ce mouvement de glissement vers l'avant, la barre 3a assure une sorte de raclage du tunnel 32 et de la paroi de fond de ce tunnel.

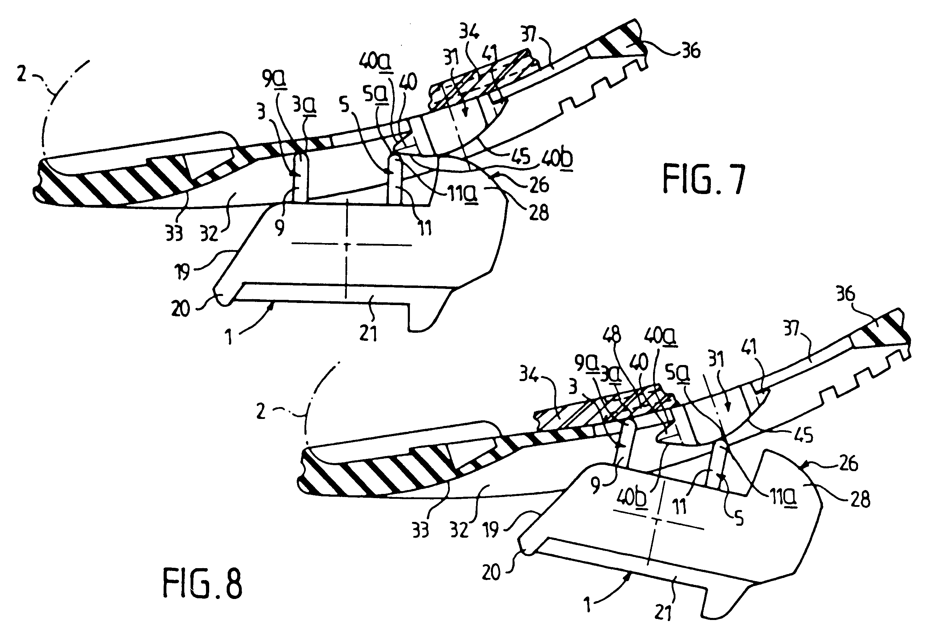

La chaussure poursuit son mouvement vers l'avant et vers le bas comme illustré sur la figure 7. L'appui sur la barre 3a maintient l'arrière de la pédale au contact de la semelle ou de la cale 31. Les cotes du dessous de la cale 31 et de la partie supérieure du capot 26 sont étudiées pour que le prolongement ou pointe avant 40 de la cale n'accroche pas la barre horizontale 5a de l'organe d'accrochage arrière 5.

Comme illustré sur la figure 8, le franchissement de la barre 5a par la cale 31 est facilité grâce à la partie bombée 45 prévue sous cette cale. Lorsque cette partie bombée 45 appuie sur la barre 5a, l'autre barre frontale 3a est appliquée énergiquement contre le fond du tunnel et permet, par exemple, de remuer ou décrocher la terre qui a pu s'accumuler dans le fond du tunnel 32 juste en avant de la pointe 40.

Du fait de cette agitation de la terre ou de la boue, et du fait que le prolongement 40 a une largeur réduite, l'accrochage de la barre 3a sur le prolongement 40 s'effectue dans de bonnes conditions, lorsque le cycliste poursuit le mouvement d'avance de la chaussure, depuis la position de la figure 8, pour engager le prolongement 40 sous la barre 3a. A ce moment, la barre 5a de l'organe d'accrochage arrière 5, est libérée par la cale 31. L'arceau 5 qui avait été effacé vers l'arrière par suite de la pression verticale exercée sur la barre 5a, revient vers l'avant sous l'action des ressorts de rappel 13, suivant un mouvement de rotation dans le sens contraire des aiguilles d'une montre selon la représentation des dessins, autour de l'axe 6. La barre 5a vient s'engager dans l'espace situé au dessus du prolongement 41, comme illustré sur la figure 9.

Les opérations d'accrochage se sont donc effectuées dans de bonnes conditions, avec une sorte d'enroulement de la pédale contre le fond du tunnel 32.

Il est à noter que la profondeur du tunnel 32 et le profil en long de son fond sont déterminés, en fonction des cotes de la pédale et notamment des arceaux 3 et 5, du capot 26 et de la cale 31, pour assurer le passage de la cale 31 au-dessus de la barre 5a de l'arceau arrière, puis un pivotement suffisant, vers le haut, de la barre 3a de l'arceau avant en vue de l'accrochage.

Plus précisément, comme visible sur la figure 7, la profondeur du tunnel 32, dans la zone qui se trouve au droit de la barre 3a, alors que le prolongement 40 arrive au droit de la barre 5a de l'arceau arrière, est telle que l'appui de la barre 3a contre le fond du tunnel et l'appui du capot 26 contre la cale 41 définissent une position angulaire de la pédale 1 dans laquelle la barre 5a de l'arceau arrière se trouve au-dessous du prolongement 40, de préférence sensiblement au contact de sa surface inférieure 40b.

La profondeur du tunnel augmente, au voisinage de la cale 31, puisqu'au niveau de la fenêtre 37, qui appartient au tunnel, il n'y a plus d'épaisseur de semelle de marche 36 ; le fond du tunnel est alors déterminé par la surface inférieure de la première rigide 34. Ainsi, lorsque la chaussure, poursuivant son mouvement d'avance, arrive dans la position de la figure 8, l'augmentation de la profondeur du tunnel 32 de la semelle permet à l'avant de la pédale 1 de pivoter vers le haut, jusqu'à ce que la barre 3a vienne en appui contre le fond du tunnel. La barre 3a se trouve alors dans une bonne position pour s'engager sur le prolongement 40.

Le décrochage de la chaussure relativement à la pédale s'effectue par un mouvement de torsion, provoquant le recul de la barre 5a, et la libération du prolongement 41. Lors de ce mouvement de torsion les parois latérales obliques 38, 39 du tunnel peuvent coopérer avec les surfaces latérales du capot 26, ce qui facilite le soulèvement de la semelle, dans la région comportant la cale 31. Le décrochage final se réalise lorsque la barre 5a libère le prolongement 41.

L'angle de décrochage est défini par la longueur du prolongement 41.

Comme visible sur la figure 1, lorsque l'accrochage de la chaussure sur la pédale est réalisé, les parties de la semelle situées de part et d'autre du tunnel 32 portent sur les bossages 30 de la pédale.

La chaussure accrochée à la pédale possède une certaine liberté latérale, d'environ 5 mm, puisque la largeur du tunnel 32 est légèrement supérieure à la dimension des arceaux 3 et 5 suivant la direction parallèle à l'axe 4.

En outre, les surfaces de la cale venant en appui frontal contre les barres 3a et 5a sont inclinées, comme dans le cas de FR-A-2653089, de manière à laisser une liberté angulaire, par exemple de plus ou moins 5° de part et d'autre d'une position moyenne, à la chaussure relativement à la pédale, sans risque de décrochage.

Il est à noter que la pédale 1, lorsqu'elle est libre, peut se balancer autour de l'axe 4 vers l'arrière notamment par suite de trépidations ou de mouvements dus à l'inertie.

Sur la figure 4 la pédale 1 a été représentée inclinée vers l'arrière d'un angle d'environ 20°, au moment où la semelle attaque la pédale en vue de l'accrochage

Grâce à l'agencement du bec 19 et de la pédale dans son ensemble, l'arête inférieure 20 du bec 19 (dans la position de la figure 4, cette arête inférieure 20 constitue le point le plus haut de la pédale) reste en avant du plan vertical V passant par l'axe géométrique 4 de la pédale.

La semelle de la chaussure en rencontrant, dans son mouvement arrière/avant, cette arête 20 et en exerçant une pression vers le bas met la pédale dans la bonne position pour réaliser l'accrochage dans les conditions expliquées précédemment.

Le cas échéant, la pointe de la chaussure peut entrer en contact, au début de la phase d'accrochage, avec le bec 19 alors que la pédale est relativement inclinée vers l'arrière, comme illustré sur la figure 5. L'action arrière/avant de la chaussure sur le bec 19 ramènera la pédale 1 dans la bonne position pour l'accrochage.

La cale 31 peut avoir des dimensions réduites, par exemple une largeur de l'ordre de 30 mm (dimension suivant la direction parallèle à l'axe 4) et s'étendre d'environ 15 mm de part et d'autre de l'axe de la pédale, suivant la direction longitudinale.

Il est à noter également que lorsque les barres transversales 3a, 5a viennent en appui contre la semelle, elle portent contre les lames métalliques 46, 47 de la cale, ce qui répartit les forces sur la première rigide 34.

Lors du chaussage, le prolongement avant 40, ou crochet avant, de la cale 31 rencontre de la terre mise en mouvement par la barre 3a ce qui permet un accrochage correct malgré la présence de terre ou de boue dans le tunnel 32.

## Revendications

1. Ensemble d'une pédale cycliste de sécurité, équipée de moyens de butée et d'accrochage sur une face, et d'une chaussure cycliste ayant une semelle équipée d'une cale, logée dans un évidement de la semelle, cette cale étant située dans une région destinée à se trouver sensiblement sous le métatarse du pied du cycliste, ladite cale ayant une dimension réduite suivant la direction longitudinale de la semelle de sorte que l'extrémité avant de la cale se trouve sensiblement en retrait de la pointe de la semelle, les moyens de butée et d'accrochage de la pédale comprenant un organe frontal de butée et de retenue (3), sensiblement parallèle à l'axe (4), normalement horizontal, de la pédale et situé en avant de cet axe, et un organe d'accrochage arrière (5), situé en arrière de l'axe (4) de la pédale et susceptible de se déplacer suivant une direction sensiblement orthogonale à l'axe de la pédale à l'encontre de moyens de rappel élastiques (7), l'ensemble étant tel qu'un cycliste équipé de la chaussure peut provoquer l'accrochage de la semelle sur la pédale en exerçant une pression sensiblement verticale sur ladite pédale tandis qu'il peut libérer la semelle de la pédale par un mouvement de torsion du pied, caractérisé par le fait :
que la pédale (1) comprend, à l'avant, un bec (19) incliné vers l'avant dont l'arête inférieure (20) est située, relativement au plan médian (P) de la pédale, du côté opposé à l'organe frontal de butée (3) et à l'organe d'accrochage arrière (5) ;
que la pédale (1) est agencée pour prendre une position de repos située dans une plage telle que l'arête inférieure (20) du bec avant se trouve en haut de la pédale et en avant du plan vertical (V) passant par l'axe de la pédale ;
et que la semelle (S) comporte des moyens de guidage longitudinal (G) propres à coopérer avec le susdit bec (19) et avec des moyens conjugués de guidage longitudinal (3, 26) prévus sur la pédale,
les moyens de guidage longitudinal (G) comprenant dans la partie avant de la semelle englobant la zone où se trouve la cale (31), une sorte de cavité longitudinale en forme de tunnel (32), s'ouvrant vers l'avant de la semelle, à une distance réduite (K) de l'extrême pointe avant de la semelle, la partie avant de ce tunnel (32) étant limitée, dans le fond (33), par une paroi lisse favorable au glissement des moyens de butée et d'accrochage (3,5) de la pédale contre ce fond (33),
tandis que les moyens conjugués de guidage longitudinal de la pédale comprennent à l'arrière de la pédale, une sorte de capot (26), dont la surface supérieure (27) est propre à venir glisser contre le fond (33) du tunnel de la semelle et/ou contre la cale (31) permettant d'éviter un accrochage intempestif de la partie avant (40) de la cale (31) sur l'organe d'accrochage arrière (5) de la pédale.

2. Ensemble selon la revendication 1, caractérisé par le fait que la pédale (1) est munie d'un contrepoids (21), et est agencée de manière que dans sa position normale de repos, son plan moyen (P) soit incliné d'environ 30° vers l'avant, par rapport au plan vertical (V) passant par l'axe horizontal de la pédale, le bec (19) de la pédale étant situé vers le haut, l'arête inférieure du bec avant demeurant en avant dudit plan vertical (V), même si la pédale, pour une raison quelconque, prend une position légèrement inclinée vers l'arrière.

3. Ensemble selon la revendication 1 ou 2, caractérisé par le fait que la pédale (1) est agencée de telle sorte que l'arête inférieure (20) dudit bec (19) reste en avant du plan vertical (V) passant par l'axe horizontal de la pédale (1) pour une plage angulaire de positions de la pédale allant jusqu'à une position inclinée vers l'arrière d'environ 30°.

4. Ensemble selon l'une des revendications précédentes, caractérisé par le fait que le bec avant (19) de la pédale a un contour sensiblement en forme de trapèze dont la petite base constitue la susdite arête inférieure (20).

5. Ensemble selon la revendication 1, caractérisé par le fait que la cale (31) comprend une partie médiane bombée (45) facilitant le glissement sur cet organe d'accrochage arrière (5).

6. Ensemble selon la revendication 1, caractérisé par le fait que les surfaces latérales (28) du capot sont agencées pour faciliter le décrochage de la chaussure, relativement à la pédale (1), lors d'un mouvement de torsion du pied de l'utilisateur, par coopération de l'une des surfaces latérales (28) du capot, avec une des parois latérales (38, 39) du tunnel (32) de la semelle.

7. Ensemble selon l'une des revendications 1, 5 et 6, caractérisé par le fait que la profondeur du tunnel (32) et le profil en long de son fond sont déterminés, en fonction des cotes de la pédale, du capot et de la cale, pour assurer, au cours du mouvement d'avance de la chaussure, le passage de la cale (31) au-dessus de l'organe d'accrochage arrière (5), puis un pivotement suffisant vers le haut de l'avant de la pédale (1) en vue de l'accrochage.

8. Ensemble selon la revendication 1, caractérisé par le fait que la semelle (S) de la chaussure comporte des moyens de guidage latéral comprenant les parois latérales (38, 39) du tunnel (32) de la semelle qui sont obliques par rapport au plan longitudinal médiateur (Q) de la semelle, de telle sorte qu'une section transversale du tunnel a la forme d'un trapèze dont la grande base est située vers le bas et la petite base est située dans le fond du tunnel, tandis que les moyens de guidage latéral conjugués de la pédale sont constitués par des surfaces inclinées ou arrondies transversalement (9a, 10a ; 11a, 12a) prévues sur les bords latéraux de l'organe de butée (3) frontal de la pédale et de l'organe d' accrochage arrière (5), de sorte que la coopération d'une paroi latérale oblique (38,39)du tunnel et d'une surface arrondie ou inclinée, amène naturellement la semelle (S) et la cale (31) dans la position correcte d'accrochage.

9. Ensemble selon la revendication 8, caractérisé par le fait que la largeur de la section du tunnel en partie basse est supérieure d'environ 15 mm à la dimension, suivant la direction parallèle à l'axe de la pédale, de l'organe de butée frontal et de l'organe arrière d'accrochage de la pédale, tandis que la largeur de la section du tunnel, au niveau de la zone des parois latérales du tunnel contre laquelle peut venir en appui un bord latéral de l'organe de butée frontal, est choisie pour autoriser une liberté en coulissement latéral réduit, notamment d'environ 5 mm.

10. Ensemble selon l'une quelconque des revendications précédentes, dans lequel l'organe de butée frontal (3) est constitué par un arceau, généralement en fil métallique de section circulaire, cet arceau présentant une barre (3a) sensiblement parallèle à l'axe (4) de la pédale et située au-dessus du plan de la pédale, et deux parties (9, 10) sensiblement perpendiculaires au plan de la pédale se raccordant à la barre transversale par un arrondi (9a, 10a), caractérisé par le fait que l'arrondi de raccordement (9a, 10a) entre la barre transversale (3a) et les montants (9,10) de l'arceau a un rayon suffisant pour assurer un bon guidage latéral de la semelle en coopérant avec la paroi latérale oblique (38, 39) du tunnel (32) de la semelle.

11. Ensemble selon la revendication 10, caractérisé par le fait que le rayon intérieur de courbure des angles de l'arceau est supérieur ou égal à 6 mm.

12. Ensemble selon la revendication 10 ou 11, caractérisé par le fait que la cale (31), fixée sous la semelle, comporte à l'avant et à l'arrière dans sa partie médiane, des prolongements (40, 41) de largeur réduite, faisant saillie suivant la direction longitudinale et propres à s'engager sous la barre transversale (3a, 5a) de l'arceau correspondant de la pédale, l'ouverture d'entrée (42), associée à chaque prolongement, ayant une dimension supérieure au diamètre de la barre (3a), tandis qu'en fond de logement la dimension (43) de l'espace réservé est sensiblement égale au diamètre de la barre (3a) de l'arceau.

13. Ensemble selon la revendication 12, caractérisé par le fait que la cale (31) comporte, dans sa partie destinée à venir en contact avec la semelle, deux lames (46, 47), convexes vers l'extérieur, sensiblement rectangulaires, séparées par un espace longitudinal central, et s'étendant suivant la direction longitudinale de la semelle, ces lames étant propres à être reçues dans des évidements (49, 50) prévus dans la semelle pour assurer un guidage longitudinal de la cale relativement à la semelle, lors de son réglage.

14. Ensemble selon l'une quelconque des revendications précédentes, caractérisé par le fait qu'il est agencé de manière que, lors de l'attaque de la pédale (1) par la semelle de la chaussure, dans un mouvement d'arrière vers l'avant et de haut en bas, la pédale (1) bascule sensiblement à l'horizontale, par coopération initiale du bec (19) de la pédale avec la semelle puis la barre transversale (3a) de l'arceau avant s'applique contre le fond (33) du tunnel de la semelle tandis que le capot arrière (26) vient en appui contre la semelle ou la cale au cours du glissement d'avance de la semelle relativement à la pédale, le capot étant libéré de ce contact au moment de l'accrochage correct de la cale (31) sur la pédale.

15. Pédale cycliste de sécurité en particulier pour la pratique du vélo tout terrain, ou du cyclocross, équipée de moyens de butée et d'accrochage sur une face comprenant un organe frontal de butée et de retenue, sensiblement parallèle à l'axe de la pédale, normalement horizontal, et situé en avant de cet axe, et un organe d'accrochage arrière situé en arrière de l'axe de la pédale et susceptible de se déplacer suivant une direction sensiblement orthogonale à l'axe de la pédale à l'encontre de moyens de rappel élastiques, caractérisée par le fait qu'elle comporte un bec (19) incliné vers l'avant et dont l'arête inférieure (20) est située, relativement au plan médian (P) de la pédale, du côté opposé à l'organe frontal de butée (3) et à l'organe d'accrochage arrière (5), la pédale étant agencée pour prendre une position normale de repos tel que le bec (19) soit situé en haut et en avant d'un plan vertical (V) passant par l'axe horizontal de la pédale (4).

16. Pédale selon la revendication 15, caractérisée par le fait qu'elle est équipée d'un contrepoids (21) et qu'elle est agencée pour prendre une position normale de repos inclinée d'environ 30° par rapport à la verticale, le bec (19) étant agencé de telle sorte que son arête inférieure (20) reste en avant du plan vertical (V) passant par l'axe horizontal de la pédale même si la pédale (1) prend une position inclinée vers l'arrière jusqu'à 30° environ.

17. Pédale selon la revendication 15 ou 16, caractérisée par le fait qu'elle comprend, à l'arrière, une sorte de capot (26) dont la surface supérieure, en particulier convexe, est propre à venir glisser contre la semelle d'une chaussure cycliste équipée d'une cale (31) pour éviter un accrochage intempestif de la partie avant de la cale sur l'organe d'accrochage arrière (5) de la pédale.

18. Pédale selon l'une des revendications 15 à 17 dans laquelle l'organe de butée frontal et l'organe d' accrochage arrière sont constitués respectivement, par un arceau en fil métallique présentant une barre sensiblement parallèle à l'axe de la pédale et située au-dessus du plan de la pédale, et deux parties sensiblement perpendiculaires au plan de la pédale qui constituent des montants, se raccordant à la barre transversale par un arrondi, caractérisée par le fait que l'arrondi de raccordement (9a, 10a ; 11a, 12a) a un rayon suffisant pour déterminer une surface convexe extérieure favorable au guidage.

19. Pédale selon la revendication 18, caractérisée par le fait que le rayon intérieur de courbure de l'arrondi (9a, 10a ; 11a, 12a) est supérieur ou égal à 6 mm.

20. Pédale selon la revendication 18 ou 19, caractérisée par le fait qu'elle comporte, de part et d'autre des arceaux (3,5), suivant une direction parallèle à l'axe (4) de la pédale, des bossages (30) d'appui propres à coopérer avec la surface inférieure de la semelle lorsque l'accrochage de la semelle a été réalisé sur la pédale.

21. Chaussure cycliste, destinée à coopérer avec une pédale cycliste selon l'une des revendications 15 à 20, comportant une semelle équipée d'une cale logée dans un évidement, ladite cale ayant une dimension réduite suivant la direction longitudinale de la semelle de sorte que l'extrémité avant de la cale se trouve sensiblement en retrait de la pointe de la semelle, caractérisée par le fait que la semelle (S) comporte, dans sa partie médiane longitudinale, une sorte de tunnel (32) s'ouvrant vers l'avant de la semelle à une distance réduite (K) de l'extrême pointe avant de la semelle, ce tunnel (32) s'étendant au moins depuis l'extrémité avant de la cale (31), le fond (33) de ce tunnel étant constitué par une paroi lisse favorable au glissement.

22. Chaussure selon la revendication 21, caractérisée par le fait que la profondeur du tunnel (32) et le profil en long de son fond sont déterminés, en fonction des cotes de la pédale, du capot et de la cale, pour assurer, au cours du mouvement d'avance de la chaussure, le passage de la cale (31) au-dessus de l'organe d' accrochage arrière (5), puis un pivotement suffisant vers le haut de l'avant de la pédale (1) en vue de l'accrochage.

23. Chaussure selon la revendication 21 ou 22, caractérisée par le fait que le tunnel (32) est limité par des parois latérales obliques (38, 39) de sorte que la section transversale de ce tunnel (32) a la forme d'un trapèze dont la grande base est située vers le bas.

24. Chaussure selon la revendication 23, caractérisée par le fait que la largeur (L) de la section du tunnel (32) en partie basse est supérieure d'environ 15 mm à la dimension, suivant l'axe (4) de la pédale, de l'organe de butée frontal (3) de cette pédale, tandis que la largeur (1) du tunnel au niveau de la zone des parois latérales du tunnel contre laquelle peut venir en appui un bord latéral de l'organe de butée frontal, est choisie pour autoriser une liberté en coulissement latéral réduit, en particulier d'environ 5 mm.

25. Chaussure selon l'une des revendications 21 à 24 dans laquelle la semelle (S) est réalisée en deux parties à savoir une semelle interne (34), ou première rigide, dans laquelle sont prévues des ouvertures longitudinales (35a) pour le passage de vis de fixation (25) de la cale et pour le réglage en longueur, et une semelle de marche (36) en une matière plus souple, caractérisée par le fait que le tunnel (32) est prévu dans la semelle de marche (36).

## Claims

1. Assembly consisting of a safety cycle pedal equipped on one face with stop and fastening means and a cycling shoe having a sole equipped with a cleat housed in a recess in the sole, this cleat being situated in a region intended to be situated substantially under the metatarsus of the foot of the cyclist, the said cleat having a small dimension in the longitudinal direction of the sole so that the front end of the cleat is situated substantially set back from the tip of the sole, the stop and fastening means of the pedal comprising a frontal stop and retaining member (3) substantially parallel to the normally horizontal axis (4) of the pedal and situated in front of this axis, and a rear fastening member (5) situated behind the axis (4) of trio pedal and capable of being displaced in a direction substantially orthogonal to the axis of the pedal against the action of elastic return means (7), the assembly being such that a cyclist wearing the shoe can fasten the sole on to the pedal by exerting substantially vertical pressure on the said pedal, while he can free the sole from the pedal by a twisting movement of his foot; characterized in that:
- the pedal (1) comprises at the front a projection (19) inclined towards the front, the lower edge (20) of which is situated, relative to the mid-plane (P) of the pedal, on the side opposite the front stop member (3) and the rear fastening member (5);
- the pedal (1) is contrived so as to assume a rest position situated within a range such that the lower edge (20) of the front projection is situated at the top of the pedal and in front of the vertical plane (V) passing through the axis of the pedal;
- and the sole (S) has longitudinal guide means (G) capable of cooperating with the aforesaid projection (19) and with mating longitudinal guide means (3, 26) provided on the pedal,
- the longitudinal guide means (G) comprising, in the front part of the sole surrounding the zone in which the cleat (31) is situated, a sort of longitudinal cavity in the form of a tunnel (32) opening towards the front of the sole at a short distance (K) from the extreme front tip of the sole, the front part of this tunnel (32) being bounded at the bottom (33) by a smooth wall promoting the sliding of the stop and fastening means (3, 5) of the pedal against this bottom (33),
- while the mating longitudinal guide means of the pedal comprise at the rear of the pedal a sort of cap (26), the upper surface (27) of which is capable of sliding against the bottom (33) of the tunnel of the sole and/or against the cleat (31) to prevent inadvertent fastening of the front part (40) of the cleat (31) on to the rear fastening member (5) of the pedal.

2. Assembly according to Claim 1, characterized in that the pedal (1) is provided with a counterweight (21) and is contrived so that in its normal rest position its mid-plane (P) is inclined by approximately 30° towards the front with respect to the vertical plane (V) passing through the horizontal axis of the pedal, the projection (19) of the pedal being situated towards the top, the lower edge of the front projection remaining in front of the said vertical plane (V) even if the pedal for any reason assumes a position inclined slightly towards the rear.

3. Assembly according to Claim 1 or 2, characterized in that the pedal (1) is contrived such that the lower edge (20) of the said projection (19) remains in front of the vertical plane (V) passing through the horizontal axis of the pedal (1) over an angular range of positions of the pedal up to a position inclined towards the rear by approximately 30°.

4. Assembly according to one of the preceding claims, characterized in that the front projection (19) of the pedal has a contour substantially in the shape of a trapezium, the small base of which constitutes the aforesaid lower edge (20).

5. Assembly according to Claim 1, characterized in that the cleat (31) comprises a domed middle part (45) facilitating sliding on this rear fastening member (5).

6. Assembly according to Claim 1, characterized in that the lateral surfaces (28) of the cap are contrived so as to facilitate unfastening of the shoe from the pedal (1) upon a twisting movement of the foot of the user, by the cooperation of one of the lateral surfaces (28) of the cap with one of the lateral walls (38, 39) of the tunnel (32) of the sole.

7. Assembly according to one of Claims 1, 5 and 6, characterized in that the depth of the tunnel (32) and the lengthwise profile of its bottom are determined as a function of the dimensions of the pedal, the cap and the cleat in order to ensure that, during the forward movement of the shoe, the cleat (31) passes over the rear fastening member (5), and then the front of the pedal (1) pivots upwards sufficiently for fastening.

8. Assembly according to Claim 1, characterized in that the sole (S) of the shoe has lateral guide means comprising the lateral walls (38, 39) of the tunnel (32) of the sole which are oblique with respect to the mid-perpendicular longitudinal plane (Q) of the sole, such that a cross-section of the tunnel has the shape of a trapezium the large base of which is situated towards the bottom and the small base of which is situated in the bottom of the tunnel, while the mating lateral guide means of the pedal consist of transversely inclined or rounded surfaces (9a, 10a; 11a, 12a) provided on the lateral edges of the frontal stop member (3) of the pedal and of the rear fastening member (5), so that the cooperation of an oblique lateral wall (38, 39) of the tunnel and of a rounded or inclined surface brings the sole (S) and the cleat (31) naturally into the correct fastening position.

9. Assembly according to Claim 8, characterized in that the width of the section of the tunnel in its lower part is approximately 15 mm greater than the dimension of the frontal stop member and of the rear fastening member of the pedal in the direction parallel to the axis of the pedal, while the width of the section of the tunnel in the zone of the lateral walls of the tunnel against which zone a lateral edge of the frontal stop member can come to bear is selected to allow for a small degree of freedom to slide laterally, especially by approximately 5 mm.

10. Assembly according to any one of the preceding claims, in which the frontal stop member (3) consists of a bow, generally of metal wire of circular section, this bow having a bar (3a) substantially parallel to the axis (4) of the pedal and situated above the plane of the pedal, and two parts (9, 10) substantially perpendicular to the plane of the pedal connected to the transverse bar by a rounded portion (9a, 10a); characterized in that the rounded portion (9a, 10a) for connecting together the transverse bar (3a) and the uprights (9, 10) of the bow has a sufficient radius to ensure good lateral guiding of the sole by cooperating with the oblique lateral wall (38, 39) of the tunnel (32) of the sole.

11. Assembly according to Claim 10, characterized in that the inside radius of curvature of the corners of the bow is greater than or equal to 6 mm.

12. Assembly according to Claim 10 or 11, characterized in that the cleat (31) fixed under the sole has at the front and at the rear, in its middle part, extensions (40, 41) of small width projecting in the longitudinal direction and capable of engaging under the transverse bar (3a, 5a) of the corresponding bow of the pedal, the entrance opening (42) associated with each extension having a dimension greater than the diameter of the bar (3a), while at the bottom of the housing the dimension (43) of the space left is substantially equal to the diameter of the bar (3a) of the bow.

13. Assembly according to Claim 12, characterized in that the cleat (31), in its part intended to come into contact with the sole, has two substantially rectangular outwardly convex blades (46, 47) separated by a central longitudinal space and extending in the longitudinal direction of the sole, these blades being capable of being received in recesses (49, 50) provided in the sole in order to ensure longitudinal guiding of the cleat relative to the sole when it is adjusted.

14. Assembly according to any one of the preceding claims, characterized in that it is contrived so that when the pedal (1) is struck by the sole of the shoe in a movement from the rear towards the front and from top to bottom, the pedal (1) tilts substantially to the horizontal position by the initial cooperation of the projection (19) of the pedal with the sole, then the transverse bar (3a) of the front bow bears against the bottom (33) of the tunnel of the sole while the rear cap (26) comes to bear against the sole or the cleat as the sole slides forward relative to the pedal, the cap being released from this contact when the cleat (31) is fastened correctly on to the pedal.

15. Safety cycle pedal, especially for mountain biking or cyclo-cross, equipped on one face with stop and fastening means comprising a frontal stop and retaining member substantially parallel to the normally horizontal axis of the pedal and situated in front of this axis; and a rear fastening member situated behind the axis of the pedal and capable of being displaced in a direction substantially orthogonal to the axis of the pedal against the action of elastic return means; characterized in that it has a projection (19) inclined towards the front and the lower edge (20) of which is situated, relative to the mid-plane (P) of the pedal, on the side opposite the frontal stop member (3) and the rear fastening member (5), the pedal being contrived so as to assume a normal rest position such that the projection (19) is situated above and in front of a vertical plane (V) passing through the horizontal axis (4) of the pedal.

16. Pedal according to Claim 15, characterized in that it is equipped with a counterweight (21); and in that it is contrived to assume a normal rest position inclined by approximately 30° with respect to the vertical, the projection (19) being contrived such that its lower edge (20) remains in front of the vertical plane (V) passing through the horizontal axis of the pedal even if the pedal (1) assumes a position inclined towards the rear by up to approximately 30°.

17. Pedal according to Claim 15 or 16, characterized in that it comprises at the rear a sort of cap (26), the upper, especially convex, surface of which is capable of sliding against the sole of a cycling shoe equipped with a cleat (31) to prevent inadvertent fastening of the front part of the cleat to the rear fastening member (5) of the pedal.

18. Pedal according to one of Claims 15 to 17, in which the frontal stop member and the rear fastening member consist respectively of a bow of metal wire having a bar substantially parallel to the axis of the pedal and situated above the plane of the pedal; and two parts substantially perpendicular to the plane of the pedal which constitute uprights connected to the transverse bar by a rounded portion; characterized in that the rounded connecting portion (9a, 10a; 11a, 12a) has a sufficient radius to define an outer convex surface promoting guiding.

19. Pedal according to Claim 18, characterized in that the inside radius of curvature of the rounded portion (9a, 10a; 11a, 12a) is greater than or equal to 6 mm.

20. Pedal according to Claim 18 or 19, characterized in that it has, on either side of the bows (3, 5) in a direction parallel to the axis (4) of the pedal, bearing bosses (30) capable of cooperating with the lower surface of the sole when the sole has been fastened on to the pedal.

21. Cycling shoe intended to cooperate with a cycle pedal according to one of Claims 15 to 20, having a sole equipped with a cleat housed in a recess, the said cleat having a small dimension in the longitudinal direction of the sole so that the front end of the cleat is situated substantially set back from the tip of the sole; characterized in that the sole (S), in its middle longitudinal part, has a sort of tunnel (32) opening towards the front of the sole at a short distance (K) from the extreme front tip of the sole, this tunnel (32) extending at least from the front end of the cleat (31), the bottom (33) of this tunnel consisting of a smooth wall promoting sliding.

22. Shoe according to Claim 21, characterized in that the depth of the tunnel (32) and the lengthwise profile of its bottom are determined as a function of the dimensions of the pedal, the cap and the cleat in order to ensure that, during the forward movement of the shoe, the cleat (31) passes over the rear fastening member (5), and then the front of the pedal (1) pivots upwards sufficiently for fastening.

23. Shoe according to Claim 21 or 22, characterized in that the tunnel (32) is bounded by oblique lateral walls (38, 39) so that the cross-section of this tunnel (32) has the shape of a trapezium the large base of which is situated towards the bottom.

24. Shoe according to Claim 23, characterized in that the width (L) of the section of the tunnel (32) in its lower part is approximately 15 mm greater than the dimension of the frontal stop member (3) of the pedal along the axis (4) of this pedal, while the width (1) of the tunnel at the zone of the lateral walls of the tunnel against which zone a lateral edge of the frontal stop member can come to bear is selected to allow for a small degree of freedom to slide laterally, especially by approximately 5 mm.

25. Shoe according to one of Claims 21 to 24, in which the sole (S) is made in two parts, namely a rigid internal sole or insole (34) in which longitudinal openings (35a) are provided for the passage of screws (25) for attaching the cleat and for lengthwise adjustment, and an outer sole (36) of a more flexible material; characterized in that the tunnel (32) is provided in the outer sole (36).

## Patentansprüche

1. Anordnung aus einem Sicherheitsfahrradpedal, das auf einer Seite mit einer Anschlag- und einer Einhakeinrichtung versehen ist, und einem Radfahrschuh mit einer Sohle, die mit einem in einer Ausnehmung der Sohle angeordneten Keil versehen ist, der in einem Bereich angeordnet ist, der sich im Wesentlichen unter dem Mittelfuß des Radfahrers befindet, wobei der Keil in Längsrichtung der Sohle eine reduzierte Abmessung aufweist, derart, daß das vordere Ende des Keils im wesentlichen gegenüber der Spitze der Sohle zurückspringt, wobei die Anschlag- und Einhakeinrichtung des Pedals ein vorderes Anschlag- und Rückhalteorgan (3), das im wesentlichen parallel zur normalerweise horizontalen Achse (4) des Pedals verläuft und vor dieser Achse angeordnet ist, und ein hinteres Einhakorgan (5) aufweist, das hinter der Achse (4) des Pedals angeordnet und entgegen der Wirkung einer elastischen Verbindungseinrichtung (7) in einer zur Pedalachse im wesentlichen orthogonalen Richtung bewegbar ist, wobei die Anordnung derart ausgebildet ist, daß ein mit diesem Schuh versehener Radfahrer das Einhaken in dem Pedal durch Aufbringen von im wesentlichen vertikalem Druck auf das Pedal bewirken kann, während er die Sohle von dem Pedal durch eine Torsionsbewegung des Fußes lösen kann,
dadurch gekennzeichnet, daß
- das Pedal (1) am vorderen Ende einen schräg nach vorn verlaufenden Vorsprung_(19) aufweist, dessen untere Kante (20) in bezug auf die Mittelebene (P) des Pedals auf der dem vorderen Anschlagorgan (3) und dem hinteren Einhakorgan (5) gegenüberliegenden Seite angeordnet ist;
- daß das Pedal (1) derart angeordnet ist, daß es eine Ruhestellung einnimmt, die sich in einem Bereich befindet, in dem die untere Kante (20) des vorderen Elements sich über dem Pedal und vor der durch die Achse des Pedals verlaufenden vertikalen Ebene (V) befindet;
- und daß die Sohle (S) eine eigene Längsführungseinrichtung (G) zum Zusammenwirken mit dem Vorsprung (19) und den auf dem Pedal vorgesehenen zugeordneten Längsführungseinrichtungen (3, 26),
- wobei die Längsführungseinrichtung (G) im vorderen Bereich der Sohle, der die Zone umfaßt, in der sich der Keil (31) befindet, eine Art länglichen Hohlraum in Form eines Tunnels (32) aufweist, der sich bis auf eine geringe Entfernung (K) vom vorderen Endpunkt der Sohle zur Vorderseite der Sohle hin öffnet, wobei der vordere Bereich des Tunnels (32) am Boden (33) durch eine glatte Wand begrenzt ist, die das Gleiten der Anschlag- und Einhakeinrichtung (3, 5) des Pedals entlang des Bodens (33) erleichtert,
- während die zugeordneten Längsführungseinrichtungen des Pedals am hinteren Ende des Pedals eine Art Kappe (26) aufweisen, deren Oberseite (27) zum Gleiten entlang des Bodens (33) des Tunnels der Sohle und/oder entlang des Keils (31) geeignet ist, wodurch ein unbeabsichtigtes Einhaken des vorderen Bereichs (40) des Keils (31) im hinteren Einhakorgan (5) des Pedals verhindert wird.

2. Anordnung nach Anspruch 1, dadurch gekennzeichnet, daß das Pedal (1) mit einem Gegengewicht (21) versehen und derart angeordnet ist, daß die Mittelebene (P) in seiner normalen Ruhestellung in bezug auf die sich durch die horizontale Achse des Pedals erstreckende vertikale Ebene (V) um ungefähr 30° nach vorn geneigt ist, wobei sich der Vorsprung (19) des Pedals in der Hochstellung befindet, und wobei die untere Kante des vorderen Vorsprungs vorn bleibt, selbst wenn das Pedal aus irgend einem Grund eine leicht nach hinten geneigte Position einnimmt.

3. Anordnung nach Anspruch 1 oder 2, dadurch gekennzeichnet, daß das Pedal (1) derart angeordnet ist, daß die untere Kante (20) des Vorsprungs (19) über einen Winkelpositionsbereich des Pedals vor der sich durch die horizontale Achse des Pedals (1) erstreckenden vertikalen Ebene (V) bleibt, der sich bis zu einer Position erstreckt, die um ungefähr 30° nach hinten geneigt ist.

4. Anordnung nach einem der vorhergehenden Ansprüche, dadurch gekennzeichnet, daß der vordere Vorsprung (19) des Pedals eine im wesentlichen die Kontur eines Trapezes aufweist, dessen kleine Basis die untere Kante (20) bildet.

5. Anordnung nach Anspruch 1, dadurch gekennzeichnet, daß der Keil (31) einen balligen Mittelteil (45) aufweist, der das Gleiten auf dem hinteren Einhakorgan (5) erleichtert.

6. Anordnung nach Anspruch 1, dadurch gekennzeichnet, daß die Seitenflächen (28) der Kappe derart angeordnet sind, daß sie das Lösen des Schuhs von dem Pedal (1) bei einer Torsionsbewegung des Fußes des Benutzers erleichtern, indem eine der Seitenflächen (28) der Kappe mit einer der Seitenflächen (38, 39) des Tunnels (32) der Sohle zusammenwirkt.

7. Anordnung nach einem der Ansprüche 1, 5 und 6, dadurch gekennzeichnet, daß die Tiefe des Tunnels (32) und das Profil entlang seines Bodens in Abhängigkeit von den Seiten des Pedals durch die Kappe und den Keil bestimmt sind, um zu gewährleisten, daß sich der Keil (31) bei der Vorwärtsbewegung des Schuhs über das hintere Einhakorgan (5) bewegt und zum Einhaken anschließend eine ausreichende Schwenkbewegung des vorderen Teils des Pedals (1) nach oben erfolgt.

8. Anordnung nach Anspruch 1, dadurch gekennzeichnet, daß die Sohle (S) des Schuhs eine Seitenführungseinrichtung aufweist, die die Seitenwände (38, 39) des Tunnels (32) der Sohle umfaßt, welche in bezug auf die Längsmittelebene (Q) der Sohle derart geneigt verlaufen, daß der Querschnitt des Tunnels die Form eines Trapezes aufweist, dessen große Basis nach unten gerichtet ist und dessen kleine Basis im Boden des Tunnels liegt, während die zugehörige Seitenführungseinrichtung des Pedals durch schräge oder abgerundete Flächen (9a, 10a; 11a, 12a) gebildet sind, die an den Seitenrändern des vorderen Anschlagorgans (3) des Pedals und des hinteren Einhakorgans (5) vorgesehen sind, derart, daß das Zusammenwirken einer schrägen Seitenwand (38, 39) des Tunnels und einer abgerundeten oder schrägen Fläche die Sohle (S) und den Keil (31) von selbst in die korrekte Einhakposition führt.

9. Anordnung nach Anspruch 8, dadurch gekennzeichnet, daß die Breite des Tunnelquerschnitts im unteren Teil um ungefähr 15 mm größer ist als die Abmessung des vorderen Anschlagorgans und des hinteren Einhakorgans, parallel zur Achse des Pedals gesehen, während die Breite des Tunnels auf der Höhe des Bereichs der Tunnelseitenwände, an dem ein Seitenrand des vorderen Anschlagorgans anliegen kann, derart gewählt ist, daß sie ein geringes seitliches Gleitspiel von ungefähr 5 mm zuläßt.

10. Anordnung nach einem der vorhergehenden Ansprüche, bei der das vordere Anschlagorgan (3) durch einen im allgemeinen aus Metalldraht mit kreisrundem Querschnitt bestehenden Bügel gebildet ist, der einen im wesentlichen parallel zur Achse (4) des Pedals verlaufenden und oberhalb der Pedalebene angeordneten Steg (3a) sowie zwei im wesentlichen senkrecht zur Pedalebene verlaufende Teile (9, 10) aufweist, die über eine Krümmung (9a, 10a) mit dem Quersteg verbunden sind, dadurch gekennzeichnet, daß die Krümmung (9a, 10a) zwischen dem Quersteg (3a) und den Stäben (9, 10) des Bügels einen Radius hat, der ausreicht, eine gute seitliche Führung der Sohle in Zusammenwirkung mit der schrägen Seitenwand (38, 39) des Tunnels (32) der Sohle zu gewährleisten.

11. Anordnung nach Anspruch 10, dadurch gekennzeichnet, daß der Innenradius der Krümmung der Ecken des Bügels größer oder gleich 6 mm ist.

12. Anordnung nach Anspruch 10 oder 11, dadurch gekennzeichnet, daß der unter der Sohle befestigte Keil (31) am vorderen und hinteren Ende im Mittelbereich Verlängerungen (40, 41) mit verringerter Breite aufweist, die in Längsrichtung vorstehen und geeignet sind, unter den Quersteg (3a, 5a) des entsprechenden Bügels des Pedals zu greifen, wobei die jedem Vorsprung zugeordnete Eintrittsöffnung (42) eine Abmessung aufweist, die größer als der Durchmesser des Stegs (3a) ist, während die Abmessung (43) des reservierten Raumes am Boden der Aufnahme im wesentlichen gleich dem Durchmesser des Stegs (3a) des Bügels ist.

13. Anordnung nach Anspruch 12, dadurch gekennzeichnet, daß der Keil (31) in seinem zum Kontakt mit der Sohle bestimmten Bereich zwei im wesentlichen rechteckige, nach außen konvexe Platten (46, 47) aufweist, die durch einen länglichen Zwischenraum voneinander getrennt sind und sich in Längsrichtung der Sohle erstrecken, wobei diese Platten in Ausnehmungen (49, 50) aufgenommen sind, die in der Sohle ausgebildet sind, um eine Längsführung des Keils in bezug auf die Sohle bei der Einstellung der Sohle zu gewährleisten.

14. Anordnung nach einem der vorhergehenden Ansprüche, dadurch gekennzeichnet, daß sie derart angeordnet ist, daß beim Angreifen der Sohle des Schuhs an dem Pedal (1) während einer von hinten nach vorne und von oben nach unten gerichteten Bewegung das Pedal (1) im wesentlichen in der Horizontalen schwenkt, und zwar durch das anfängliche Zusammenwirken des Elements (19) mit der Sohle und das anschließende Abstützen des Querstegs (3a) des vorderen Bügels an dem Boden (33) des Tunnels der Sohle, während die hintere Kappe (26) sich während des Vorwärtsgleitens der Sohle in bezug auf das Pedal an der Sohle abstützt, wobei sich die Kappe im Moment des korrekten Eingriffs des Keils (31) in das Pedal aus diesem Kontakt löst.

15. Sicherheitsradfahrpedal, insbesondere zur Verwendung mit Geländefahrrädern oder Crossrädern, das auf einer Seite mit einer Anschlag- und einer Einhakeinrichtung versehen ist, die ein vorderes Anschlag- und Rückhalteorgan, das im wesentlichen parallel zur normalerweise horizontalen Achse des Pedals verläuft und vor dieser Achse angeordnet ist, und ein hinteres Einhakorgan aufweist, das hinter der Achse des Pedals angeordnet und entgegen der Wirkung einer elastischen Verbindungseinrichtung in einer zur Pedalachse im wesentlichen orthogonalen Richtung bewegbar ist, dadurch gekennzeichnet, daß das Pedal einen schräg nach vorn verlaufenden Vorsprung (19) aufweist, dessen untere Kante (20) in bezug auf die Mittelebene (P) des Pedals auf der dem vorderen Anschlagorgan (3) und dem hinteren Einhakorgan (5) gegenüberliegenden Seite angeordnet ist, wobei das Pedal derart angeordnet ist, daß es eine Ruhestellung einnimmt, in der sich der Vorsprung (19) über dem Pedal und vor der durch die horizontale Achse (4) des Pedals verlaufenden vertikalen Ebene (V) befindet.

16. Pedal nach Anspruch 15, dadurch gekennzeichnet, daß es mit einem Gegengewicht (21) versehen und derart angeordnet ist, daß es eine in bezug auf die Mittelebene um ungefähr 30° geneigte normale Ruhestellung einnimmt, wobei dder Vorsprung (19) derart angeordnet ist, daß seine untere Kante (20) vor der sich durch die horizontale Achse des Pedals erstreckende vertikalen Ebene (V) bleibt, selbst wenn das Pedal (1) eine um ungefähr 30° nach hinten geneigte Position einnimmt.

17. Pedal nach Anspruch 15 oder 16, dadurch gekennzeichnet, daß es am hinteren Ende eine Art Kappe (26) aufweist, deren insbesondere konvexe Oberseite zum Gleiten entlang der Sohle eines mit einem Keil (31) versehenen Radfahrschuhs geeignet ist, wodurch ein unbeabsichtigtes Einhaken des vorderen Bereichs des Keils im hinteren Einhakorgan des Pedals verhindert wird.

18. Pedal nach einem der Ansprüche 15 bis 17, bei dem das vordere Anschlagorgan (3) und das hintere Einhakorgan jeweils durch einen im allgemeinen aus Metalldraht bestehenden Bügel gebildet sind, der einen im wesentlichen parallel zur Achse des Pedals verlaufenden und oberhalb der Pedalebene angeordneten Steg sowie zwei im wesentlichen senkrecht zur Pedalebene verlaufende und Stäbe bildende Teile aufweist, die über eine Krümmung mit dem Quersteg verbunden sind, dadurch gekennzeichnet, daß die Verbindungskrümmung einen Radius hat, der ausreicht, eine zu Führungszwecken gut geeignete konvexe Außenfläche zu bilden.

19. Pedal nach Anspruch 18, dadurch gekennzeichnet, daß der Innenradius der Krümmung der Ecken (9a, 10a; 11a, 12a) des Bügels größer oder gleich 6 mm ist.

20. Pedal nach Anspruch 18 oder 19, dadurch gekennzeichnet, daß es auf beiden Seiten der Bügel (3, 5) parallel zur Achse (4) des Pedals Stützvorsprünge (30) aufweist, die nach dem Einhaken der Sohle in das Pedal mit der Unterseite der Sohle zusammenwirken.

21. Radfahrschuh, zum Zusammenwirken mit einem Radfahrpedal nach einem der Ansprüche 15 bis 20, mit einer Sohle, die mit einem in einer Ausnehmung angeordneten Keil versehen ist, wobei der Keil in Längsrichtung der Sohle eine geringere Abmessung aufweist, derart, daß das vordere Ende des Keils im wesentlichen gegenüber der Spitze der Sohle zurückspringt, dadurch gekennzeichnet, daß die Sohle (S) in ihrem Längsmittelbereich eine Art von Tunnel (32) aufweist, der sich bis auf eine geringe Entfernung (K) vom vorderen Endpunkt der Sohle zur Vorderseite der Sohle hin öffnet, wobei sich der Tunnel (32) wenigstens bis zum vorderen Ende des Keils (31) erstreckt und der Boden (33) des Tunnels durch eine glatte Wand gebildet ist, die das Gleiten erleichtert.

22. Schuh nach Anspruch 21, dadurch gekennzeichnet, daß die Tiefe des Tunnels (32) und das Profil entlang seines Bodens in Abhängigkeit von den Seiten des Pedals durch die Kappe und den Keil bestimmt sind, um zu gewährleisten, daß sich der Keil (31) bei der Vorwärtsbewegung des Schuhs über das hintere Einhakorgan (5) bewegt und zum Einhaken anschließend eine ausreichende Schwenkbewegung des vorderen Teils des Pedals (1) nach oben erfolgt.

23. Schuh nach Anspruch 21 oder 22, dadurch gekennzeichnet, daß der Tunnel (32) durch schräge Seitenwände (38, 39) derart begrenzt ist, daß der Querschnitt des Tunnels (32) die Form eines Trapezes aufweist, dessen große Basis nach unten gerichtet ist.

24. Schuh nach Anspruch 23, dadurch gekennzeichnet, daß die Breite (L) des Querschnitts des Tunnels (32) im unteren Teil um ungefähr 15 mm größer ist als die Abmessung des vorderen Anschlagorgans (3) des Pedals, parallel zur Achse (4) des Pedals gesehen, während die Breite (1) des Tunnels auf der Höhe des Bereichs der Tunnelseitenwände, an dem ein Seitenrand des vorderen Anschlagorgans anliegen kann, derart gewählt ist, daß sie ein geringes seitliches Gleitspiel von ungefähr 5 mm zuläßt.

25. Schuh nach einem der Ansprüche 21 bis 24, bei dem die Sohle (S) aus zwei Teilen gebildet ist, nämlich einer Innensohle (34) oder ersten steifen Sohle, in der längliche Öffnungen (35a) für den Durchtritt von Schrauben (25) zum Befestigen des Keils (31) und zum Einstellen der Länge vorgesehen sind, und einer Laufsohle (36) aus einem flexibleren Material, dadurch gekennzeichnet, daß der Tunnel (32) in der Laufsohle (36) ausgebildet ist.
